# DEMANDE DE BREVET EUROPEEN

(11) **EP 4 729 390 A1**
(43) Date de publication de la demande: **22.04.2026**
(21) Numéro de dépôt: 25209162.4
(22) Date de dépôt: 16.10.2025
(51) Int. Cl.: B62D 1/189

(54) **PIÈCE DE FIXATION D'UNE COLONNE DE DIRECTION SUR UN SUPPORT D'UN VÉHICULE AUTOMOBILE, ENSEMBLE ASSOCIÉ ET PROCÉDÉ DE FABRICATION ASSOCIÉ**

(30) Priorité: 17.10.2024 FR 2411258
(71) Demandeur: JTEKT COLUMN SYSTEMS FRANCE SAS, 25350 Mandeure (FR)
(72) Inventeur: HOUEIX, Fabrice, 70400 HERICOURT (FR)
(74) Mandataire: Lavoix

(57) **Abrégé**

La présente invention concerne une pièce de fixation (18) d'une colonne de direction (12) sur un support (14) d'un véhicule automobile, la pièce de fixation (10) comprenant :
a. une première partie (22) destinée à être fixée sur la colonne de direction (12),
b. une deuxième partie (24) formant un logement de réception cylindrique (34) destiné à recevoir une vis de fixation et de serrage (16), et
c. une troisième partie de liaison (26) reliant la première partie (22) et la deuxième partie (24) ;
la première partie (22), la deuxième partie (24) et la troisième partie (26) étant d'un seul tenant.

## Description

La présente invention concerne une pièce de fixation d'une colonne de direction sur un support de véhicule.

Un véhicule automobile comporte habituellement un volant réglable en profondeur, notamment pour des raisons de confort du conducteur. A cet effet, le volant est porté par une colonne de direction et est réglable en hauteur et/ou selon la direction longitudinale.

Une telle colonne de direction est généralement fixée au véhicule automobile par une pluralité de points de fixation.

En particulier, l'extrémité inférieure de l'axe de colonne est habituellement fixée à un support par un point de fixation inférieur autorisant la rotation de l'axe de colonne par rapport au support pour permettre le réglage en hauteur de la colonne.

Ce point de fixation inférieur comprend généralement un pivot en tôle fixé à l'axe de colonne, une entretoise métallique et de deux entretoises en plastique fixant l'entretoise métallique au pivot ; l'entretoise métallique définissant un logement de réception d'une vis de fixation et de serrage fixée au support.

Un tel point de fixation n'est pas entièrement satisfaisant, car il est complexe et coûteux à fabriquer en raison notamment de son grand nombre de pièces.

En outre, l'axe de colonne est habituellement fixé également par des points de fixation supérieurs.

Afin d'assurer l'équilibrage de la colonne lors de la phase de réglage en position du volant, il est connu d'intégrer au niveau desdits points de fixation supérieurs des ressorts d'équilibrage.

Une tel assemblage est donc complexe.

Le but de l'invention est alors de simplifier la fixation d'une colonne de direction sur un support d'un véhicule.

A cet effet, l'invention a pour objet une pièce de fixation d'une colonne de direction sur un support d'un véhicule automobile, la pièce de fixation comprenant :
a. une première partie destinée à être fixée sur la colonne de direction,
b. une deuxième partie formant un logement de réception cylindrique destiné à recevoir une vis de fixation et de serrage, et
c. une troisième partie de liaison reliant la première partie et la deuxième partie ;
la première partie, la deuxième partie et la troisième partie étant d'un seul tenant.

Suivant d'autres aspects avantageux de l'invention, la pièce de fixation comprend une ou plusieurs des caractéristiques suivantes, prises isolément ou suivant toutes les combinaisons techniquement possibles :
- la première partie comprenant une première extrémité et une deuxième extrémité et la deuxième partie comprenant une première extrémité et une deuxième extrémité, la troisième partie comprend au moins une portion s'étendant de la deuxième extrémité de la première partie à la deuxième extrémité de la deuxième partie ;
- chaque portion de la troisième partie a une section transversale en forme d'arc de cercle s'étendant entre la deuxième extrémité de la première partie et la deuxième extrémité de la deuxième partie ;
- la section transversale de la première partie comprend un segment principal comprenant la deuxième extrémité et s'étendant parallèlement à une direction longitudinale et un segment secondaire comprenant la première extrémité et non parallèle à la direction longitudinale ;
- la deuxième partie présente une section transversale en forme d'arc de cercle s'étendant de la première extrémité à la deuxième extrémité de la deuxième partie.
- la pièce de fixation est fabriquée en un matériau métallique.

L'invention concerne également un ensemble comprenant :
a. une colonne de direction comprenant un axe de colonne ;
b. un support fixé à un véhicule automobile ;
c. une vis de fixation et de serrage ; et
d. une pièce de fixation ayant les caractéristiques ci-dessus ;

la première partie de la pièce de fixation étant fixée à l'axe de colonne,
la vis de fixation et de serrage étant reçue dans le logement de réception de la deuxième partie de la pièce de fixation et fixant la pièce de fixation au support.

Suivant d'autres aspects avantageux de l'invention, l'ensemble comprend une ou plusieurs des caractéristiques suivantes, prises isolément ou suivant toutes les combinaisons techniquement possibles :
- la première partie de la pièce de fixation est soudée sur l'axe de colonne ;
- la colonne de direction est fixée au support uniquement par la connexion assurée par la vis de fixation et de serrage reçue dans la pièce de fixation fixée à l'axe de colonne.

L'invention concerne également un procédé de fabrication d'une pièce de fixation ayant les caractéristiques ci-dessus, le procédé comprenant les étapes suivantes :
a. fourniture d'un flan de tôle ; et
b. usinage du flanc de tôle de sorte à définir la première, la deuxième et la troisième parties.

L'invention apparaîtra plus clairement à la lecture de la description qui va suivre, donnée uniquement à titre d'exemple non limitatif, et faite en référence aux dessins dans lesquels :
La Figure 1 est une vue schématique de côté d'un ensemble selon l'invention, l'ensemble comprenant une pièce de fixation ;
La Figure 2 est une vue schématique en perspective de la pièce de fixation de la Figure 1 ; et
La Figure 3 est une vue en perspective avec une coupe de la pièce de fixation de la Figure 2.

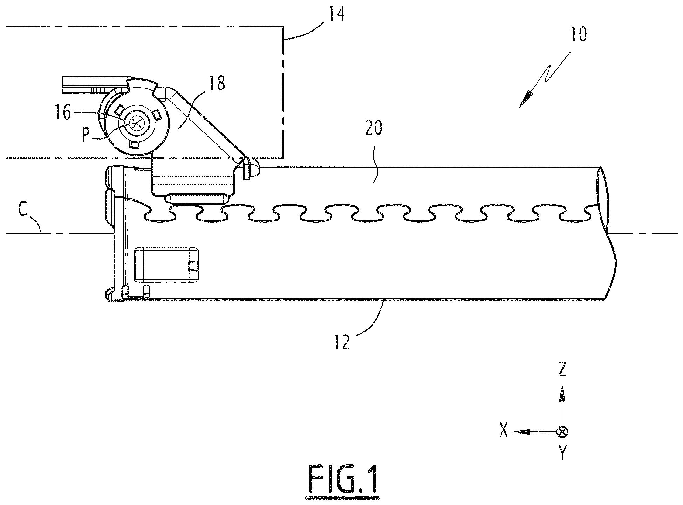

La Figure 1 montre un ensemble 10 selon l'invention.

L'ensemble 10 est plus particulièrement agencé dans un véhicule, notamment un véhicule automobile.

On définit un repère orthogonal avec une direction d'élévation Z, correspondant à un axe haut-bas du véhicule lorsque l'ensemble 10 est agencé dans le véhicule, une direction longitudinale X perpendiculaire à la direction d'élévation Z et une direction transversale Y perpendiculaire à la direction longitudinale X et à la direction d'élévation Z.

Comme cela est visible sur la Figure 1, l'ensemble 10 comprend une colonne de direction 12, un support 14 (illustré par des tirets alternés sur la Figure 1), une vis de fixation et de serrage 16 et une pièce de fixation 18.

La colonne de direction 12 comprend par exemple un axe 20 de colonne de direction s'étendant selon un axe de colonne C.

De préférence, la colonne de direction 12 est réglable suivant la direction longitudinale X et/ou en hauteur, par exemple de sorte à régler l'inclinaison de l'axe de colonne C par rapport à la direction longitudinale X.

En particulier, l'axe 20 de colonne de direction est par exemple un corps télescopique, de forme générale de révolution autour d'un axe longitudinal de révolution.

L'axe 20 est par exemple destiné à être relié cinématiquement, d'une part, à un volant (non représenté) du véhicule et, d'autre part, à un joint de Cardan (non représenté). On rappelle qu'un joint de Cardan est un dispositif mécanique permettant le couplage de deux arbres dont les axes géométriques concourent en un même point.

Le support 14 est fixé au véhicule automobile.

Avantageusement, le support 14 définit un logement (non visible sur les Figures), en particulier ayant une section transversale, c'est-à-dire dans un plan YZ perpendiculaire à la direction longitudinale X, en forme de U inversé avec notamment des parois latérales perpendiculaires à une paroi supérieure.

La vis de fixation et de serrage 16 s'étend par exemple selon la direction transversale Y.

En particulier, dans la configuration assemblée illustrée sur la Figure 1, la vis de fixation et de serrage 16 est de préférence fixée au support 14.

Plus précisément, la vis de fixation et de serrage 16 s'étend, selon la direction transversale Y, entre les deux parois latérales du logement du support 14.

Comme illustré sur la Figure 1, dans la configuration assemblée, la pièce de fixation 18 fixe la colonne de direction 12 au support 14.

De préférence, dans la configuration assemblée, la colonne de direction 12 est fixée au support 14 uniquement par la connexion assurée par la vis de fixation et de serrage 16 reçue dans la pièce de fixation 18 fixée la colonne de direction 12.

Plus précisément, dans la configuration assemblée illustrée sur la Figure 1, la pièce de fixation 18 constitue une liaison pivot de l'axe 20 de la colonne de direction 12 sur le support 14 autour d'un axe de pivot P parallèle à la direction transversale Y, en particulier pour permettre le réglage en hauteur de la colonne de direction 12.

Autrement dit, la pièce de fixation 18 fixe l'axe 20 de la colonne de direction 12 sur le support 14 tout en autorisant un degré de liberté en rotation autour de l'axe de pivot P qui est parallèle à la direction transversale Y.

La pièce de fixation 18 comprend une première partie 22, une deuxième partie 24 et une troisième partie 26 de liaison reliant la première partie 22 et la deuxième partie 24.

La première partie 22, la deuxième partie 24 et la troisième partie 26 sont d'un seul tenant, et de préférence sont venues de matière.

La pièce de fixation 18 est de préférence fabriquée en un matériau métallique, par exemple en acier ou en aluminium.

Par exemple, la première partie 22, la deuxième partie 24 et la troisième partie 26 sont définies par usinage, en particulier par pliage et emboutissage, d'un même flanc de tôle métallique, comme cela sera expliqué plus en détails par la suite.

En particulier, la première partie 22, la troisième partie 26 et la deuxième partie 24 s'étendent dans la continuité l'une de l'autre, plus précisément selon la direction longitudinale X.

Autrement dit, la première partie 22 comprend une première extrémité 22A, dite extrémité libre, et une deuxième extrémité 22B connectée à la troisième partie 26. La deuxième partie 24 comprend une première extrémité 24A, dite extrémité libre, et une deuxième extrémité 24B connectée à la troisième partie 26. Chacun desdites extrémités 22A, 22B, 24A, 24B s'étend en particulier perpendiculairement à la direction longitudinale X.

Dans la configuration assemblée, la première partie 22 est fixée sur la colonne de direction 12, et plus précisément sur l'axe 20 de colonne de direction 12.

Plus particulièrement, la première partie 22 est soudée sur l'axe 20 de la colonne de direction 12.

En particulier, comme cela est illustré sur la Figure 1, la première extrémité 22A est fixée sur l'axe 20 de la colonne de direction 12 par des cordons de soudure.

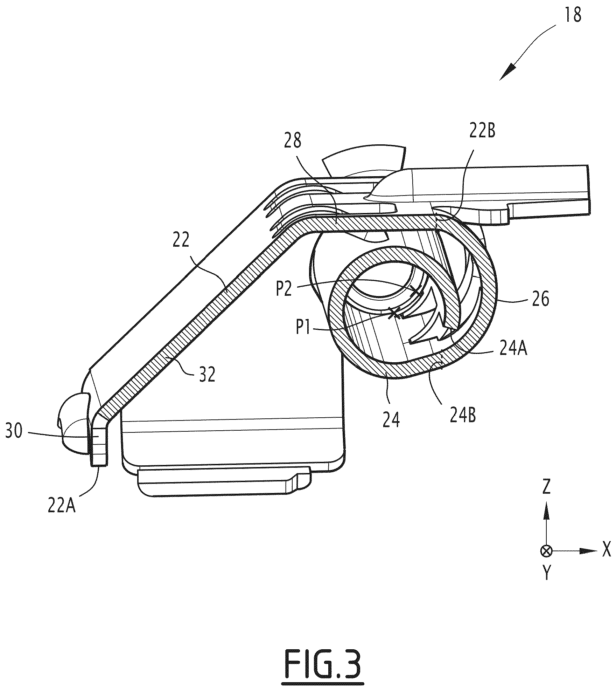

Comme cela est visible sur la Figure 3, la première partie 22 de la pièce de fixation 18 présente par exemple une section transversale, c'est-à-dire dans un plan XZ perpendiculaire à la direction transversale Y, de forme de ligne polygonale, en particulier s'étendant de la première extrémité 22A à la deuxième extrémité 22B.

Plus précisément, la section transversale de la première partie 22 comprend un segment principal 28 comprenant la deuxième extrémité 22B et s'étendant parallèlement à la direction longitudinale X et un segment secondaire 30 comprenant la première extrémité 22A et non parallèle à la direction longitudinale X, par exemple s'étendant parallèlement à la direction d'élévation Z.

Dans le mode de réalisation particulier illustré sur les Figures, la section transversale de la première partie 22 comprend également un segment supplémentaire 32 reliant le segment principal 28 et le segment secondaire 30.

Par exemple, ledit segment supplémentaire 32 s'étend de manière inclinée par rapport à la direction longitudinale X et à la direction d'élévation Z.

La deuxième partie 24 forme un logement de réception 34.

Dans le mode de réalisation particulier illustré sur les Figures, le logement de réception 34 est de forme cylindrique et s'étend autour d'un axe de logement T, en particulier parallèle à la direction transversale Y.

En particulier, la deuxième partie 24 présente une section transversale en forme d'arc de cercle centré sur un centre P1 sensiblement sur l'axe de logement T, l'arc de cercle s'étendant de la première extrémité 24A à la deuxième extrémité 24B de la deuxième partie 24.

Par exemple, la section transversale de la deuxième partie 24 est un arc de cercle de rayon compris entre 0.5 cm et 3.5 cm.

Par exemple, la section transversale de la deuxième partie 24 est un arc de cercle avec un angle au centre supérieur à 270°, et de préférence compris entre 290° et 360°.

En variante (non-illustrée), la deuxième partie 24 a une section transversale d'une autre forme qu'un arc de cercle, par exemple en ligne brisée.

En particulier, dans la configuration assemblée, l'axe de logement T est sensiblement confondu avec l'axe de pivot P.

Plus précisément, dans la configuration assemblée, la vis de fixation et de serrage 16 est reçue dans le logement de réception 34 de la deuxième partie 24 de la pièce de fixation 18 et fixant la pièce de fixation 18 au support 14 de sorte à autoriser la rotation de l'axe 20 de la colonne de direction 12 par rapport au support 14.

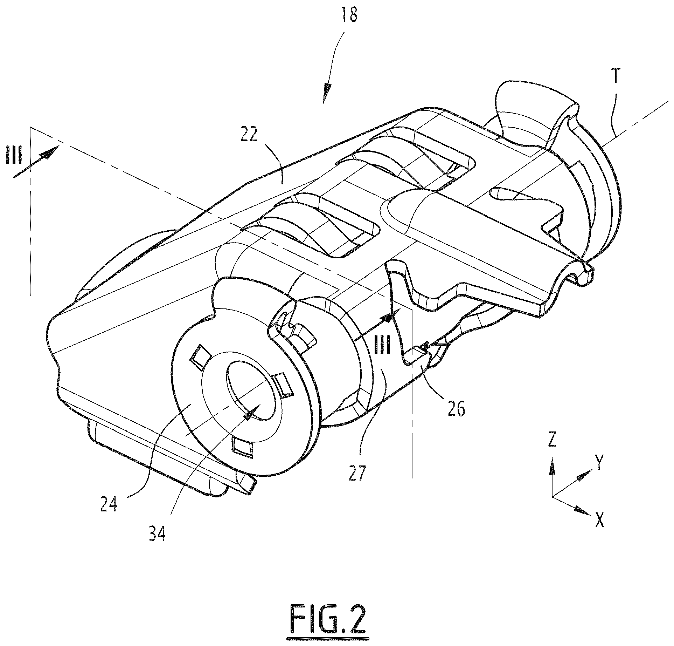

Comme cela est visible sur la Figure 2, la troisième partie 26 comprend par exemple au moins une portion 27 s'étendant de la deuxième extrémité 22B de la première partie 22 à la deuxième extrémité 24B de la deuxième partie 24.

Par exemple dans le mode de réalisation illustré sur les Figures, la troisième partie 26 comprend deux portions 27.

En particulier, chacune des portions 27 de la troisième partie 26 a une section transversale en forme d'arc de cercle centré sur un centre P2 et la deuxième extrémité 24B de la deuxième partie 24.

Par exemple, la section transversale de chaque portion 27 de la troisième partie 26 est un arc de cercle de rayon compris entre 1.0 cm et 4.0 cm.

Par exemple, la section transversale de chaque portion 27 de la troisième partie 26 est un arc de cercle avec un angle au centre compris entre 80° et 100°.

En variante (non-illustrée), chacune des portions 27 de la troisième partie 26 a une section transversale d'une autre forme qu'un arc de cercle, par exemple en ligne brisée.

Chaque portion 27 de la troisième partie 26 forme par exemple un ressort.

En particulier, dans la configuration assemblée, chaque portion 27 est apte à servir de support de rotation, tout en se déformant élastiquement, notamment pendant le réglage vers le haut ou vers le bas de la colonne de direction.

Comme cela est visible sur la Figure 3, le segment principal 28 de la première partie 22, une des portions 27 de la troisième partie 26 et la deuxième partie 24 forment ensemble de préférence une section transversale en forme d'escargot, c'est-à-dire de forme sensiblement spiralée.

Un procédé de fabrication de la pièce de fixation 18 va maintenant être décrit.

Le procédé comprend une première étape de fabrication d'un flan de tôle, de préférence métallique, par exemple en acier ou en aluminium.

Le procédé comprend ensuite une deuxième étape d'usinage du flanc de tôle de sorte à définir la première 22, la deuxième 24 et la troisième 26 parties.

En particulier, lors de cette deuxième étape d'usinage, le flanc de tôle est par exemple découpé et plié, notamment de sorte à définir la section transversale en forme d'escargot.

Plus précisément, le flanc de tôle déplié s'étend par exemple entre la première extrémité 22A de la première partie 22 et la première extrémité 24A de la deuxième partie 24. Ledit flanc de tôle est ensuite plié et notamment enroulé sur lui-même.

En outre, lors de cette deuxième étape d'usinage, le flanc de tôle est par exemple embouti.

Un procédé d'assemblage de l'ensemble 10 va maintenant être décrit.

Le procédé comprend en particulier une première étape de fourniture d'une colonne de direction 12 comprenant un axe 20, d'un support 14, d'une vis de fixation et de serrage 16 et d'une pièce de fixation 18 telle que décrite ci-dessus, et notamment fabriquée selon le procédé de fabrication écrit ci-dessus.

Le procédé comprend ensuite une étape de fixation de la pièce de fixation 18 sur l'axe 20 de la colonne de direction 12, et par exemple par soudure de la première extrémité 22A de la première partie 22 de la pièce de fixation 18 sur l'axe 20 de colonne de direction 12.

Le procédé comprend ensuite une étape d'insertion de la vis 16 dans le support 14 et dans le logement de réception 34.

De préférence, la colonne de direction 12 est ainsi fixée au support 14 uniquement par la connexion assurée par la vis de fixation et de serrage 16 reçue dans la pièce de fixation 18 fixée la colonne de direction 12.

Un procédé de réglage en position de la colonne de direction 12 va maintenant être décrit.

Un mécanisme de verrouillage en position (non représenté sur les figures) de la colonne de direction 12 est tout d'abord déverrouillé par l'utilisateur, en particulier à l'aide d'une manette de verrouillage et de déverrouillage.

Ensuite, la colonne de direction 12 est réglée en position, notamment en hauteur et/ou en profondeur, en particulier en déplaçant le volant de direction de la voiture (non représenté sur les figures).

De préférence, lors du réglage en hauteur de la colonne de direction 12, l'axe 20 de la colonne de direction 12 pivote sur le support 14 autour de l'axe de pivot P par l'intermédiaire de la pièce de fixation 18.

En particulier, pendant le réglage en hauteur de la colonne de direction 12, chaque portion 27 de la troisième partie 26 de la pièce de fixation 18 sert de support de rotation, tout en se déformant élastiquement.

En outre, pendant le réglage en hauteur de la colonne de direction 12, la pièce de fixation 18 assure l'équilibrage de la colonne de direction 12 dans sa position verticale.

Puis, lorsque la position souhaitée est atteinte, l'utilisateur verrouille le mécanisme de verrouillage en position, en particulier à l'aide de la manette de verrouillage et de déverrouillage.

Un tel ensemble 10 est particulièrement avantageux.

En particulier, la pièce de fixation 18 est fabriquée d'un seul tenant et ainsi simple à fabriquer et de manière économique.

Par ailleurs, la fabrication de ladite pièce de fixation 18 par usinage d'un flanc de tôle permet d'éviter l'utilisation de pièces supplémentaires en plastique, ce qui limite les risques de friction générée notamment par les entretoises en plastique de l'état de la technique.

En outre, de par sa forme en escargot, la pièce de fixation 18 permet d'assurer à la fois la fonction de pivot et celle d'équilibrage de la colonne de direction dans sa position verticale lorsque le mécanisme de réglage est déverrouillé.

Ainsi, une telle pièce de fixation 18 permet de réduire le nombre de pièces de l'ensemble 10, en supprimant la nécessité d'utiliser des ressorts d'équilibrages et/ou d'agencer des points fixation avant.

Un tel ensemble 10 est donc plus simple et économique que celui de l'état de la technique.

## Revendications

1. Pièce de fixation (18) d'une colonne de direction (12) sur un support (14) d'un véhicule automobile, la pièce de fixation (10) comprenant :
a. une première partie (22) destinée à être fixée sur la colonne de direction (12),
b. une deuxième partie (24) formant un logement de réception (34) destiné à recevoir une vis de fixation et de serrage (16), et
c. une troisième partie de liaison (26) reliant la première partie (22) et la deuxième partie (24);
la première partie (22), la deuxième partie (24) et la troisième partie (26) étant d'un seul tenant, la première partie (22) comprenant une première extrémité (22A) et une deuxième extrémité (22B) et la deuxième partie (24) comprenant une première extrémité (24A) et une deuxième extrémité (24B), la troisième partie (26) comprenant au moins une portion (27) s'étendant de la deuxième extrémité (22B) de la première partie (22) à la deuxième extrémité (24B) de la deuxième partie (24),
la deuxième partie (24) présentant une section transversale en forme d'arc de cercle s'étendant de la première extrémité (24A) à la deuxième extrémité (24B) de la deuxième partie (24).

2. Pièce de fixation (18) selon la revendication 1, dans laquelle chaque portion (27) de la troisième partie (26) a une section transversale en forme d'arc de cercle s'étendant entre la deuxième extrémité (22B) de la première partie (22) et la deuxième extrémité (24B) de la deuxième partie (24).

3. Pièce de fixation (18) selon la revendication 1 ou 2, dans laquelle la section transversale de la première partie (22) comprend un segment principal (28) comprenant la deuxième extrémité (22B) et s'étendant parallèlement à une direction longitudinale (X) et un segment secondaire (30) comprenant la première extrémité (22A) et non parallèle à la direction longitudinale (X).

4. Pièce de fixation (18) selon l'une quelconque des revendications précédentes fabriquée en un matériau métallique.

5. Ensemble (10) comprenant :
a. une colonne de direction (12) comprenant un axe de colonne (20);
b. un support (14) fixé à un véhicule automobile;
c. une vis de fixation et de serrage (16); et
d. une pièce de fixation (18) selon l'une quelconque des revendications précédentes;
la première partie (22) de la pièce de fixation (18) étant fixée à l'axe de colonne (20),
la vis de fixation et de serrage (16) étant reçue dans le logement de réception (34) de la deuxième partie (24) de la pièce de fixation (18) et fixant la pièce de fixation (18) au support (14).

6. Ensemble (10) selon la revendication 5, dans lequel la première partie (22) de la pièce de fixation (18) est soudée sur l'axe de colonne (20).

7. Ensemble (10) selon la revendication 5 ou 6, dans lequel la colonne de direction (12) est fixée au support (14) uniquement par la connexion assurée par la vis de fixation et de serrage (16) reçue dans la pièce de fixation (18) fixée à l'axe de colonne (20).

8. Procédé de fabrication d'une pièce de fixation (18) selon l'une quelconque des revendications 1 à 4, le procédé comprenant les étapes suivantes :
a. fourniture d'un flan de tôle ; et
b. usinage du flanc de tôle de sorte à définir la première (22), la deuxième (24) et la troisième (26) parties.
